(19) Europäisches Patentamt
European Patent Office
Office européen des brevets

(11) **EP 2 124 070 B1**

(12) **EUROPEAN PATENT SPECIFICATION**

(45) Date of publication and mention
of the grant of the patent:
**18.01.2017 Bulletin 2017/03**

(51) Int Cl.:
*G01S 7/52* *(2006.01)*    *G01S 15/52* *(2006.01)*

(21) Application number: **09006832.1**

(22) Date of filing: **20.05.2009**

(54) **Moving object detection system with internal Doppler-reference signal**

Bewegungssensor mit internem Doppler-Referenzsignal

Détecteur de mouvement avec un signal de référence doppler

(84) Designated Contracting States:
**AT BE BG CH CY CZ DE DK EE ES FI FR GB GR HR HU IE IS IT LI LT LU LV MC MK MT NL NO PL PT RO SE SI SK TR**

(30) Priority: **22.05.2008 JP 2008134718**

(43) Date of publication of application:
**25.11.2009 Bulletin 2009/48**

(73) Proprietors:
• **Panasonic Corporation**
**Osaka 571-8501 (JP)**
• **TOYOTA JIDOSHA KABUSHIKI KAISHA**
**Toyota-shi, Aichi-ken, 471-8571 (JP)**

(72) Inventors:
• **Mugiuda, Toru**
**Kadoma-shi**
**Osaka 571-8686 (JP)**
• **Katayama, Susumu**
**Kadoma-shi**
**Osaka 571-8686 (JP)**
• **Kasano, Fumihiro**
**Kadoma-shi**
**Osaka 571-8686 (JP)**
• **Takagi, Toshimasa**
**Kadoma-shi**
**Osaka 571-8686 (JP)**
• **Tani, Toyohiro**
**Kadoma-shi**
**Osaka 571-8686 (JP)**
• **Fujikawa, Hidehiko**
**Kadoma-shi**
**Osaka 571-8686 (JP)**

• **Funayama, Tomoyuki**
**Toyota-shi,**
**Aichi 471-8571 (JP)**
• **Endo, Takeo**
**Toyota-shi,**
**Aichi 471-8571 (JP)**
• **Tanaka, Masahiro**
**Toyota-shi,**
**Aichi 471-8571 (JP)**

(74) Representative: **Appelt, Christian W.**
**Boehmert & Boehmert**
**Anwaltspartnerschaft mbB**
**Patentanwälte Rechtsanwälte**
**Pettenkoferstrasse 20-22**
**80336 München (DE)**

(56) References cited:
**EP-A- 0 825 455        EP-A1- 0 557 800**
**EP-A2- 0 684 486        WO-A-03/052454**
**DE-A1- 3 016 316        JP-A- 61 051 583**
**JP-A- 62 231 185        JP-A- 2008 008 871**
**US-A- 3 883 870        US-A- 4 980 871**
**US-A- 5 315 304        US-A- 5 936 524**
**US-B1- 6 437 730**

• **"CHAPTER 1: Timer Based Oscillators ED - Flind A", PRACTICAL OSCILLATOR CIRCUITS, BERNARD BABANI PUBLISHING LTD, LONDON, UK, 1 May 1996 (1996-05-01), pages 1-27, XP001525077, ISBN: 978-0-85934-393-0**

## Description

TECHNICAL FIELD

The invention relates generally to moving object detection systems and, more particularly, to a moving object detection system configured to judge whether or not a moving object approaching or leaving the system exists in a monitoring space based on Doppler shift.

BACKGROUND ART

There is a growing need for a moving object detection system for preventing vehicle theft and theft from a car. This kind of system is disclosed in, for example, Japanese Patent Application Publication No. S55-063774 published on May 14, 1980, Japanese Patent Application Publication No. 2008-008871 published on January 17, 2008 or the like.

Such a system is configured: to extract cosine and sine component signals from an oscillation signal for generating energy waves (e.g., ultrasonic waves) and an input signal obtained from incoming energy waves; and to convert the cosine and sine component signals into binary signals to set to the X and Y coordinates in an X-Y coordinate system, respectively. An X coordinate value is 1 or 0 and a Y coordinate value is also 1 or 0, and accordingly a coordinate point (X, Y) corresponds to any one of first quadrant (1, 1), second quadrant (0, 1), third quadrant (0, 0) and fourth quadrant (1, 0) in the coordinate system. The system is also configured: to judge that a moving object (e.g., a man) approaching the system (specifically a receiver) exists in a monitoring space (e.g., an in-car space) if (X, Y) turns counterclockwise around the origin of the coordinate system; and to judge that a moving object leaving the system exists in the monitoring space if (X, Y) turns clockwise. In this prior art, existence of a moving object approaching or leaving the system can be detected.

Japanese Patent Application Publication No. H05-232241 published on September 7, 1993 discloses an ultrasonic sensor. This sensor is configured: to monitor incoming ultrasonic waves (an incoming signal) more than a predetermined level if transmitting ultrasonic waves (an output signal); and to give an alarm if the interval between the output signal and the incoming signal is more than a predetermined time. In this prior art, trouble (reduction) of transmission power and receiving sensitivity can be detected.

However, there is an issue that the ultrasonic sensor can only detect each trouble of transmission power and receiving sensitivity. In order to further detect trouble of, for example, a detector, an exclusive check circuit is further required.

WO 03/052454 A1 discloses a motion detector using the Doppler shift principle, wherein the phase and/or amplitude of the Doppler shifted signals and the transmitted signals are combined to produce a detection signal.

JP 61 051 583 A discloses a speed measuring instrument, wherein the speed measurement is based on a Doppler shifted received signal which is combined with the original signal to measure the speed of the vehicle.

In EP 08 254 455 A2 a failure determination device of radar apparatuses is disclosed, wherein a high frequency signal is modulated by a frequency from a modulation signal and transmitted from an antenna and the distance and speed information of an object is detected based upon a reflected signal received from the object, wherein the modulation is used to detect a failure.

US 6,437,730 B1 discloses a method for checking an FM/CW type radio altimeter which sends out a continuous wave that is frequency modulated linearly between two boundaries values and based on the delay of the received, reflected signal, a height can be calculated. EP 0 557 800 B1 discloses a receiver distortion correction circuit, which subtracts the Nth order signal from the distorted output signal for providing a distortion correction output signal.

US 3,883,870 discloses a system for phase aligning parallel signal processing channels used in receiving systems of monopulse radars using test signals having a predetermined phase relationship which are applied at the input and each of the two signal processing channels, and a phase detectors measures the phase of the resulting output signals.

US 5,315,304 discloses a digital monopulse radar employing dynamical real time calibration during operation with a transmitter section, timing circuit, RF section, IF section, in-phase and quadrature section and a digital signal processor.

US 4,980,871 discloses an ultrasonic tracking system comprising a transmitting unit and a drive unit, wherein the transmitting unit is carried by the subject to be tracked and produces brief, periodic ultrasonic bursts and the drive unit has an ultrasonic receiver and a motorized assembly capable of tilting and panning an attached camera in response to the control signals from the receiver.

A. Flind "Practical Oscillator Circuits" described in Chapter 1 various timer-based oscillators in detail.

EP 0 684 486 A2 discloses a multi-beam radar system for obtaining information such as the presence or absence of an object, the distance to the object, and the speed relative to the object by scanning beams of ultrasonic waves or radio waves in numerous directions, sending the beams, and receiving echo waves from the object.

DISCLOSURE OF THE INVENTION

It is an object of the present invention to detect different trouble of an oscillator (a first oscillator), a transmitter, a receiver, a detector and a judgment device.

The invention relates to a moving object detection system according to claim 1 and claims 2 to 6 refer to specifically advantageous realizations of the subject matter of claim 1.

A moving object detection system of the present invention comprises an oscillation means, a transmitter, a receiver, a detector and a judgment device. The oscillation means is configured to generate a first oscillation signal having a first frequency. The transmitter is configured to transmit energy waves to a monitoring space. The energy waves have the same frequency as that of the first oscillation signal. The receiver is configured to receive incoming energy waves from the monitoring space to generate an input signal. The detector is configured to obtain a detection signal from the first oscillation signal and the input signal. The detection signal is a Doppler shift signal when the input signal includes a second frequency that is different from the first frequency. The judgment device is configured: to judge whether or not a moving object approaching or leaving the receiver exists in the monitoring space based on the detection signal; and to output a moving object detection signal if the moving object exists in the monitoring space. In an aspect of the invention, the oscillation means is configured to further generate a check signal having a check frequency that is different from the first frequency. The moving object detection system further comprises a switch and a controller. The switch is configured to supply the first oscillation signal or the check signal to the detector. The controller has a monitoring phase and a check phase and is configured: to supply the first oscillation signal to the detector through the switch at the monitoring phase; and also to supply the check signal to the detector through the switch at the check phase.

In this invention, since the controller supplies the check signal to the detector through the switch at the check phase, the detector generates a Doppler shift signal and thereby it is possible to detect different trouble of the first oscillator, the transmitter, the receiver, the detector and the judgment device.

Preferably, the oscillation means comprises a first oscillator and a second oscillator. The first oscillator is configured to generate the first oscillation signal to supply the first oscillation signal to the transmitter and the switch. The second oscillator is configured to generate the check signal to supply the check signal to the switch.

In an embodiment, the check frequency is set within a variation range of the second frequency corresponding to a speed range of the moving object to be monitored. In this embodiment, it is possible to detect different trouble of the first oscillator, the transmitter, the receiver, the detector and the judgment device by utilizing original operation.

In an embodiment, the controller comprises a microcomputer comprising a timer function. The oscillation means is formed with the timer function. In this embodiment, the system can be provided with the check phase without drastically changing its hardware.

In an embodiment, the controller is configured: to supply the check signal the detector through the switch at the check phase; and subsequently to supply the first oscillation signal the detector through the switch at the monitoring phase. In this embodiment, it is possible to automatically check whether or not the system (i.e., the first oscillator, the transmitter, the receiver, the detector and the judgment device) is normal prior to the monitoring phase.

In an embodiment, the system further comprises a transmitter switch. The transmitter comprises a plurality of transmitters connected to the first oscillator through the transmitter switch. The controller is configured to connect the transmitters to the first oscillator one by one through the transmitter switch at the check phase. In this embodiment, it is possible to detect different trouble of the first oscillator, the transmitter (i.e., each of the transmitters), the receiver, the detector and the judgment device. In addition, the monitoring space can be expanded and also blind spots can be reduced.

BRIEF DESCRIPTION OF THE DRAWINGS

Preferred embodiments of the invention will now be described in further details. Other features and advantages of the present invention will become better understood with regard to the following detailed description and accompanying drawings where:

FIG. 1 is a block diagram of a moving object detection system in accordance with a first embodiment of the present invention;
FIG. 2 is a block diagram of a moving object detection system in accordance with a second embodiment of the present invention; and
FIG. 3 is a block diagram of a moving object detection system in accordance with a third embodiment of the present invention.

BEST MODE FOR CARRYING OUT THE INVENTION

FIRST EMBODIMENT

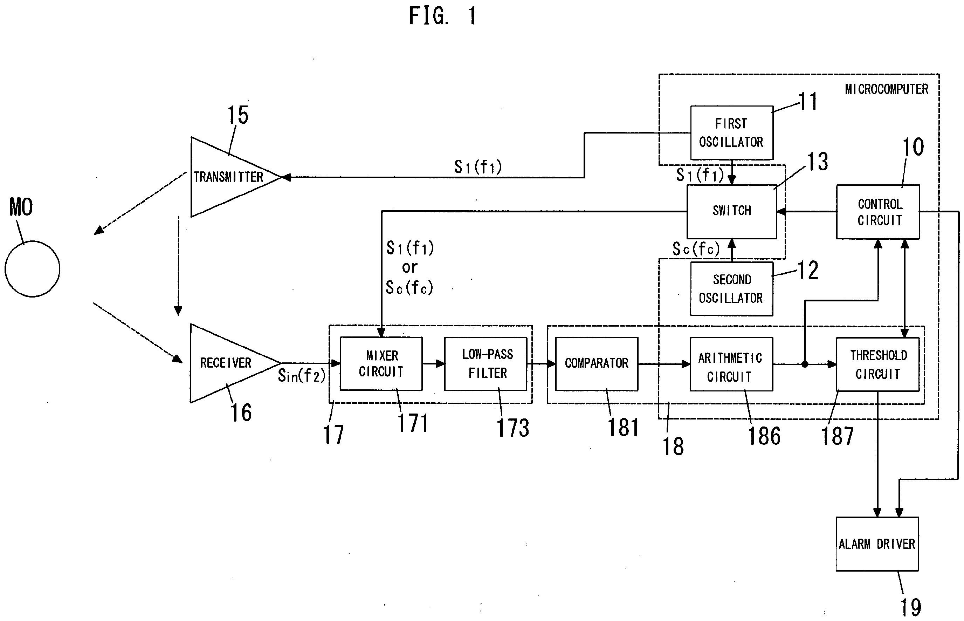

FIG. 1 shows a moving object detection system in accordance with a first embodiment of the present invention. This system belongs to an ultrasonic Doppler type, and includes a first oscillator 11, a transmitter 15, a receiver 16, a detector 17, a judgment device 18 and an alarm driver 19. The system also includes a second oscillator 12, a switch 13 and a control circuit 10 (controller) according to an aspect of the invention.

The moving object detection system is installed so as to monitor a monitoring space comprising an object which remains stationary with respect to the transmitter 15 and the receiver 16. In the first embodiment, the system is incorporated in a vehicle (e.g., a car), and the transmitter 15 and the receiver 16 are located in the in-car space comprising objects such as a body, window glasses, interior objects and son on. However, not limited to this, the monitoring space of the invention may be an open space. In this instance, the transmitter 15 may have the directivity by which the receiver 16 can directly receive one of the ultrasonic waves from the transmitter 15 (see an arrow in FIG. 1), or the moving object detection system may further include a movable mechanism for changing the orientation of the transmitter 15 so that the receiver 16 can receive the ultrasonic waves from the transmitter 15.

The first oscillator 11 is configured to generate a first oscillation signal $S_1$ having a first frequency (ultrasonic frequency) $f_1$, and to supply the signal $S_1$ to the transmitter 15 and the detector 17. In the first embodiment, the signal $S_1$ is selectively supplied to the detector 17 through the switch 13.

The transmitter 15 is configured to transmit, to the monitoring space, energy waves having the same frequency as that of the first oscillation signal ($S_1$). For example, the transmitter 15 is configured to transmit ultrasonic waves of which amplitude periodically changes (e.g., sine wave shaped ultrasonic waves having the frequency $f_1$) to the monitoring space according to the signal $S_1$ from the first oscillator 11. However, not limited to this, the energy waves of the present invention may be micro waves or radio waves. For example, the transmitter 15 is formed of an output device such as a piezoelectric loudspeaker, a piezoelectric vibrator or the like, and a drive circuit configured to drive the output device in accordance with the signal $S_1$.

The receiver 16 is configured to receive incoming ultrasonic waves from the monitoring space to generated an input signal $S_{in}$ and to supply the signal Sin to the detector 17. For example, the receiver 16 is formed of an input device such as a piezoelectric microphone, a piezoelectric vibrator or the like, and a signal processing circuit for amplification and waveform shaping of a signal obtained from the input device.

The detector 17 is configured to obtain a detection signal from the signals $S_1$ and $S_{in}$. The detection signal becomes a Doppler shift signal when the signal Sin includes a second frequency $f_2$ that is different from the frequency $f_1$. The Doppler shift signal can be obtained when a moving object MO in the monitoring space reflects the ultrasonic waves from the transmitter 15 and the receiver 16 then receives the reflected waves. The detector 17 is formed of, for example, a mixer circuit 171 and a low-pass filter 173. The circuit 171 is configured to mix the signals $S_1$ and $S_{in}$ to produce a mixed signal. In the first embodiment, the first oscillator 11 transmits sine wave shaped ultrasonic waves, and accordingly if the input signal Sin includes the second frequency $f_2$, the mixed signal includes the component including $f_2+f_1$ (a cosine component) and the component including $f_2-f_1$ (a cosine component). The low-pass filter 173 is configured to remove the component including $f_2+f_1$ to extract the component including $f_2-f_1$. That is, the detection signal becomes a Doppler shift signal having the frequency difference $f_2-f_1$ when the signal Sin includes the frequency $f_2$. In an example, the filter 173 is configured to send out a detection signal having a frequency difference $f_2-f_1$ within a predetermined frequency range. The frequency range is set based on the first frequency $f_1$ and a variation range of a second frequency $f_2$ obtained from the moving object MO to be detected.

The judgment device 18 is configured: to judge whether or not a moving object MO approaching or leaving the receiver 16 exists in the monitoring space based on a detection signal; and to supply a moving object detection signal (e.g., an alarm signal) to the alarm driver 19 if the moving object MO exists in the monitoring space. In the first embodiment, the device 18 is formed of a comparator 181, an arithmetic circuit 186 and a threshold circuit 187. The first oscillator 11, the arithmetic circuit 186, the threshold circuit 187, the second oscillator 12 and the control circuit 10 are also formed of at least one microcomputer comprising a program and a clock (timer) function. For example, each of the first and second oscillators 11 and 12 is formed of a timer function (e.g., a pulse output mode port), and a low-pass filter that is a discrete circuit. However, not limited to this, the first and second oscillators of the invention may be formed of one oscillator and a frequency converter, or may be a discrete device (circuit) each.

The comparator 181 is configured to convert a detection signal from the filter 173 into a binary signal. For example, the comparator 181 is configured: to produce a first digital signal (e.g., a HIGH signal) showing presence of Doppler shift component(s) if a detection signal from the filter 173 is equal to or more than a predetermined value; and to otherwise produce a second digital signal (e.g., a LOW signal) showing non-presence of Doppler shift component..

The arithmetic circuit 186 is configured to supply the threshold circuit 187 with a digital value (e.g., "1") representing the existence of a moving object MO if receiving a first or second digital signal during a predetermined time for removing noise.

The threshold circuit 187 is configured: to accumulate the digital value from the arithmetic circuit 186 to obtain an accumulated value; and to supply the moving object detection signal to the alarm driver 19 if the accumulated value reaches or exceeds a predetermined judgment threshold for a predetermined judgment period.

However, not limited to the comparator 181, the arithmetic circuit 186 and the threshold circuit 187, the judgment device of the invention may be configured to operate as follows. First, the judgment device sequentially converts a detection signal (an analog signal) from the detector 17 into a digital value through an A/D conversion input port of a microcomputer. Second, the judgment device obtains the speed of a moving object MO based on the converted digital values and the first frequency $f_1$. Finally, the judgment device supplies the moving object detection signal to the alarm driver 19 if the speed is included in a predetermined threshold range corresponding to a speed range of the moving object MO to be monitored.

The alarm driver 19 is configured to drive an alarm device (not shown) in accordance with the moving object detection signal. The alarm device is configured to give an alarm. For example, the alarm device is a loudspeaker. However, not limited to this, the alarm device may be a communication device, a storage device (e.g., memory) or the like.

The second oscillator 12 is configured to generate a check signal $S_c$ having a check frequency $f_c$ that is different from the first frequency $f_1$. The switch 13 is configured to supply the detector 17 (specifically mixer circuit 171) with the first oscillation signal $S_1$ or the check signal $S_c$.

The control circuit 10 has a monitoring phase and a check phase and is configured: to supply the detector 17 with the first oscillation signal $S_1$ through the switch 13 at the monitoring phase; and also to supply the detector 17 with the check signal $S_c$ through the switch 13 at the check phase. In the first embodiment, the control circuit 10 is configured: to supply the detector 17 with a check signal $S_c$ through the switch 13 at the check phase; and subsequently to supply the detector 17 with the first oscillation signal $S_1$ through the switch 13 at the monitoring phase. The control circuit 10 is also configured: to supply the alarm driver 19 with a first signal for showing that the moving object detection system is normal if the accumulated value reaches or exceeds the judgment threshold for the judgment period at the check phase; and to otherwise supply the alarm driver 19 with a second signal for showing that the system is not normal, after the judgment period. The control circuit 10 is also configured to stop the threshold circuit 187 from supplying a moving object detection signal to the alarm driver 19 when supplying the first signal to the alarm driver 19. In addition, the alarm driver 19 is configured: to drive the alarm device so as to make a first informative sound showing that the moving object detection system is normal, according to the first signal instead of the moving object detection signal; and also to drive the alarm device so as to make a second informative sound showing that the moving object detection system is not normal, according to the second signal. However, not limited to this, the control circuit 10 may be configured to allow the threshold circuit 187 to supply a moving object detection signal to the alarm driver 19 if the accumulated value reaches or exceeds the judgment threshold for the judgment period at the check phase.

At the check phase, since the check signal $S_c$ is supplied to the detector 17, the detector 17 mixes the input signal Sin and the check signal $S_c$ to obtain a detection signal. If a moving object MO does not exist in the monitoring space, the input signal $S_{in}$ has the same frequency (i.e., $f_1$) as that of the first oscillation signal $S_1$, and accordingly the detection signal is a Doppler shift signal having the frequency difference $f_c$-$f_1$. Even if a moving object MO remains stationary for a while in the monitoring space, the detection signal is a Doppler shift signal having the frequency difference $f_c$-$f_1$. But since the monitoring space comprises an object which remains stationary with respect to the transmitter 15 and the receiver 16, such a moving object MO is not required.

In order to detect different trouble of the first oscillator 11, the transmitter 15, the receiver 16, the detector 17 and the judgment device 18 by utilizing original operation, it is desirable that the check frequency $f_c$ is set within a variation range of the second frequency $f_2$ corresponding to a speed range of the moving object MO to be monitored. Because there is need to make a Doppler shift signal having the frequency difference $f_c$-$f_1$ correspond to a Doppler shift signal having the frequency difference $f_2$-$f_1$ obtained from the moving object MO to be monitored with the moving object detection system.

The second frequency $f_2$ is given by

$$f_2 = f_1(c+v)/(c-v),$$

where c is a speed of ultrasonic waves, and v is a speed of a moving object MO. For example, when the first frequency $f_1$ is 40kHz and a representative speed of the moving object MO to be monitored is 1m/s, the second frequency $f_2$ is approximately 40.23kHz if the speed of ultrasonic waves is 345m/s. In this instance, the check frequency $f_c$ is set to 40.23kHz, and the frequency difference $f_c$-$f_1$ is 230Hz.

The characteristic operation of the first embodiment is now explained. For example, if a driver gets out of a car with the moving object detection system and then locks the doors, the control circuit 10 supplies a check signal $S_c$ to the detector 17 through the switch 13 at the check phase. At this moment, a moving object MO does not exist in the monitoring space, and accordingly the detector 17 receives an input signal Sin and a check signal $S_c$ from the receiver 16 and the switch 13, respectively and then obtains a detection signal, namely a Doppler shift signal having the frequency difference $f_c$-$f_1$.

The frequency difference $f_c$-$f_1$ is obtained from a representative speed of the moving object MO to be monitored with the moving object detection system, and accordingly if the system is normal, an accumulated value in the judgment device 18 reaches or exceeds the judgment threshold for the judgment period, and the control circuit 10 supplies a first signal to the alarm driver 19. Thereby, the alarm device is driven with the alarm driver 19 and then emits a first informative sound showing that the moving object detection system is normal. On the other hand, if the moving object detection system is not normal, the control circuit 10 supplies a second signal to the alarm driver 19 after the judgment period. Thereby, the alarm device is driven with the alarm driver 19 and then emits a second informative sound showing that the moving object detection system is not normal. Subsequently, the control circuit 10 changes the operation phase to the monitoring phase and then monitors the monitoring space.

In the first embodiment, only by adding the second oscillator 12, the switch 13 and the control circuit 10, it is possible detect every trouble of the first oscillator 11, the transmitter 15, the receiver 16, the detector 17, the judgment device 18, the alarm driver 19 and the alarm device. Moreover, since the second oscillator 12 and the control circuit 10 are included in the microcomputer, the system can be provided with the check phase without drastically changing its hardware.

In an embodiment, the control circuit 10 is configured to periodically add the check phase during the monitoring phases.

SECOND EMBODIMENT

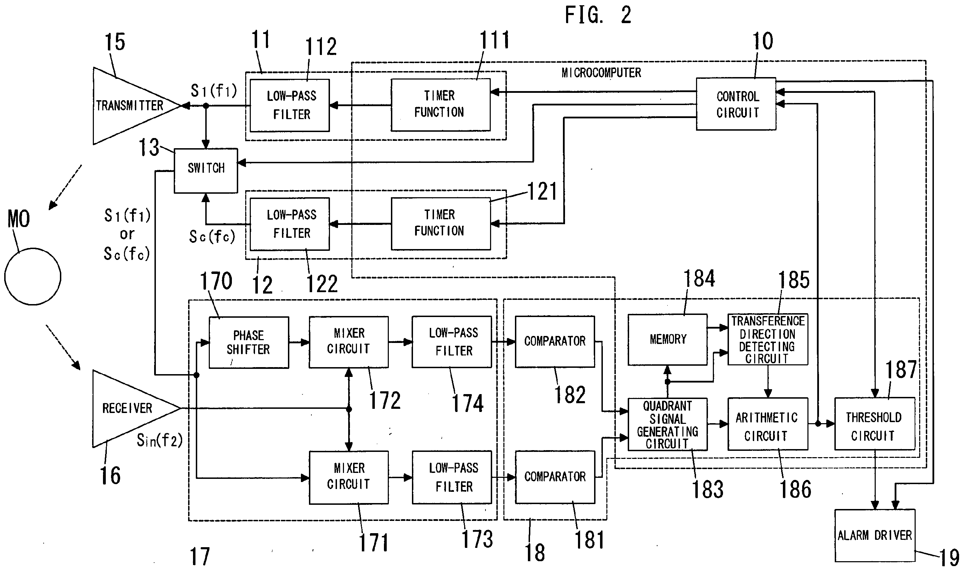

FIG. 2 shows a moving object detection system in accordance with a second embodiment of the present invention. This system belongs to an ultrasonic Doppler type, and includes a first oscillator 11, a transmitter 15, a receiver 16, a detector 17, a judgment device 18 and an alarm driver 19 like prior arts (e.g., Japanese Patent Application Publication No. 2008-008871 and Japanese Patent Application Publication No. 2008-145255). The system also includes a second oscillator 12, a switch 13 and a control circuit 10 (controller) according to an aspect of the invention. The alarm driver 19 is connected with an alarm device (not shown).

The first oscillator 11, the transmitter 15, the receiver 16 and the alarm driver 19 are configured in the same way as the first embodiment. For example, the first oscillator 11 is formed of a timer function (e.g., a pulse output mode port) 111, and a low-pass filter 112. The filter 112 is, e.g., a discrete circuit.

The detector 17 is configured to obtain two detection signals from a first oscillation signal $S_1$ and an input signal Sin. In the second embodiment, the detector 17 is formed of a phase shifter 170, mixer circuits 171 and 172, and low-pass filters 173 and 174.

For example, the phase shifter 170 is configured to produce a shifted signal by advancing the phase of a first oscillation signal $S_1$ by one-fourth period (90°) to supply the shifted signal to the mixer circuit 172.

The mixer circuit 171 and the low-pass filters 173 are configured in the same way as the first embodiment. The mixer circuit 172 is configured to mix a shifted signal and an input signal Sin to produce a mixed signal. This mixed signal includes the second frequency $f_2$, the mixed signal includes the component including $f_2+f_1$ (a sine component) and the component including $f_2-f_1$ (a sine component) if the input signal $S_{in}$ includes the second frequency $f_2$. The low-pass filter 174 is configured to remove the sine component including $f_2+f_1$ to extract the sine component including $f_2-f_1$. If a detection signal (an analog signal) from the filter 173 is set to the X coordinate in an X-Y coordinate system and a detection signal from the filter 174 is set to the Y coordinate, a coordinate point (X, Y) can be decided. This coordinate point (X, Y) turns counterclockwise if a moving object MO approaches the receiver 16, and also turns clockwise if a moving object MO leaves the receiver 16. In an example, each of the filters 173 and 174 is configured to send out a detection signal having a frequency difference $f_2-f_1$ within a predetermined frequency range. The frequency range is set based on the first frequency $f_1$ and a variation range of a second frequency $f_2$ obtained from the moving object MO to be detected.

The judgment device 18 is configured: to judge whether or not a moving object MO approaching or leaving the receiver 16 exists in the monitoring space based on detection signals from the detector 17; and to supply a moving object detection signal (e.g., an alarm signal) to the alarm driver 19 if the moving object MO exists in the monitoring space. For example, the judgment device 18 is formed of comparators 181 and 182, a quadrant signal generating circuit 183, a memory 184, a transference direction detecting circuit 185, an arithmetic circuit 186 and a threshold circuit 187.

The comparator 181 is configured to convert a detection signal from the filter 173 into a binary signal. Similarly, the comparator 182 is configured to convert a detection signal from the filter 174 into a binary signal. For example, the comparator 181 is configured: to produce a first digital signal (e.g., a HIGH signal) if a detection signal from the filter 173 is positive; and to produce a second digital signal (e.g., a LOW signal) if a detection signal from the filter 173 is negative. The comparator 182 is configured: to produce a first digital signal (e.g., a HIGH signal) if a detection signal from the filter 174 is positive; and to produce a second digital signal (e.g., a LOW signal) if a detection signal from the filter 174 is negative. The two binary signals constitute a quadrant signal to be described.

The quadrant signal generating circuit 183 is configured to produce a quadrant signal based on two binary signals from the comparators 181 and 182 to supply the quadrant signal to the memory 184 and the transference direction detecting circuit 185. The quadrant signal is produced from two binary signals, and accordingly corresponds to any one of the first quadrant (1, 1), the second quadrant (0, 1), the third quadrant (0, 0) and the fourth quadrant (1, 0) in the X-Y coordinate system if a HIGH signal is set to "1" (positive) and a LOW signal is set to "0" (negative).

The memory 184 is configured to temporally hold a quadrant signal from the quadrant signal generating circuit 183 and then to replace it with a new quadrant signal from the circuit 183.

The transference direction detecting circuit 185 is configured to compare a quadrant signal from the circuit 183 (i.e., a current quadrant signal) with a quadrant signal before renewal in the memory 184 (i.e., a previous quadrant signal). The circuit 185 is also configured: to produce a direction signal showing that a moving object MO approaches or leaves the receiver 16 based on the two quadrant signals if the current quadrant signal is different from the previous quadrant signal; and to supply the direction signal to the arithmetic circuit 186. That is, the circuit 185 produces a first direction signal showing that a moving object MO exists in the monitoring space and approaches the receiver 16 if a transference direction of the two quadrant signals is the counterclockwise direction. The circuit 185 also produces a second direction signal showing that a moving object MO exists in the monitoring space and leaves the receiver 16 if a transference direction of the quadrant signals is the clockwise direction. A first or second direction signal is supplied to the arithmetic circuit 186.

The arithmetic circuit 186 is configured: to renew a count value by adding a predetermined constant value (e.g., "1") to the current value if receiving a first direction signal from the transference direction detecting circuit 185; and also to renew the count value by subtracting the constant value from the count value if receiving a second direction signal from the circuit 185. The circuit 186 is also configured to supply the renewed count value to the threshold circuit 187. This count value is in proportion to movement distance of a moving object MO.

The threshold circuit 187 is configured to supply a moving object detection signal to the alarm driver 19 if the count value from the arithmetic circuit 186 reaches or exceeds a predetermined judgment threshold.

The second oscillator 12, the switch 13 and the control circuit 10 in the second embodiment can be configured in the same way as the first embodiment. In this instance, the same characteristic advantage as the first embodiment can be obtained.

THIRD EMBODIMENT

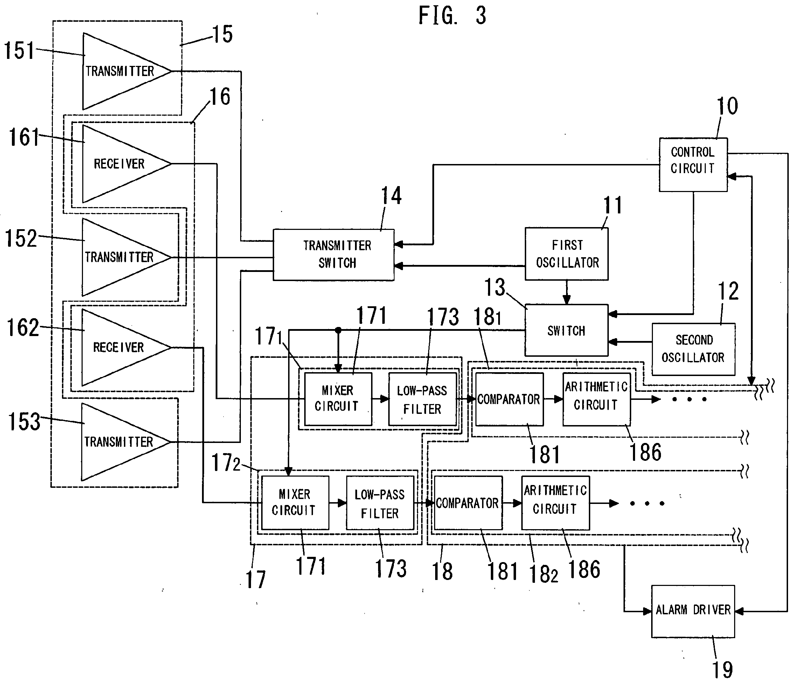

FIG. 3 shows a moving object detection system in accordance with a third embodiment of the present invention. This system belongs to an ultrasonic Doppler type, and includes a first oscillator 11, a transmitter 15, a receiver 16, a detector 17, a judgment device 18 and an alarm driver 19. The system also includes a second oscillator 12, a switch 13, a transmitter switch 14 and a control circuit 10 (controller) according to an aspect of the invention. The alarm driver 19 is connected with an alarm device (not shown).

The first oscillator 11 and the alarm driver 19 are configured like the first embodiment. The transmitter 15 includes a plurality of (three in FIG. 3) transmitters 151-153 each of which is configured in the same was as the transmitter 15 of the first embodiment. The transmitters 151-153 are connected to the first oscillator 11 through the transmitter switch 14. The receiver 16 includes a plurality of (two) receivers 161 and 162 each of which is configured in the same was as the receiver 16 of the first embodiment. Thus, the transmitters and the receivers are provided and thereby a monitoring space can be expanded and also blind spots can be reduced.

The detector 17 includes a plurality of (two) detectors $17_1$ and $17_2$ each of which is configured in the same was as the detector 17 of the first embodiment. The input of the detector $17_1$ is connected to the receiver 161, while the input of the detector $17_2$ is connected to the receiver 162. That is, the detector $17_1$ and $17_2$ are one-to-one connected to the receivers 161 and 162. Each input of the detector $17_1$ and $17_2$ is also connected to the switch 13.

The judgment device 18 includes a plurality of (two) judgment devices $18_1$ and $18_2$ each of which is configured in the same was as the judgment device 18 of the first embodiment. The input of the judgment devices $18_1$ is connected to the output of the detector $17_1$, while the input of the judgment devices $18_2$ is connected to the output of the detector $17_2$.

The second oscillator 12, the switch 13 and the control circuit 10 are configured like the first embodiment. The transmitter switch 14 is configured to connect all or any one of the transmitters 151-153 to the first oscillator 11 under the control of the control circuit 10. That is, the control circuit 10 is configured: to connect all of the transmitters 151-153 to the first oscillator 11 through the transmitter switch 14 at a monitoring phase; and also to connect the transmitters 151-153 to the first oscillator 11 one by one (sequentially) through the transmitter switch 14 at a check phase.

At a check phase, if all of the transmitters 151-153 are connected to the first oscillator 11, the control circuit 10 may supply the alarm driver 19 with a first signal for showing that the moving object detection system is normal even if any of the transmitters 151-153 is in bad condition. In the third embodiment, since the transmitters 151-153 are connected to the first oscillator 11 one by one, it is possible detect every trouble of the first oscillator 11, the transmitter 15 (i.e., each of the transmitters 151-153), the receiver 16, the detector 17, the judgment device 18, the alarm driver 19 and the alarm device.

In an embodiment, at least one detector (e.g., $17_1$) of the detector 17 is connected to receivers of the receiver 16, and the moving object detection system further includes a receiver switch. The receiver switch is configured to connect all or any one of the receivers to the at least one detector (e.g., $17_1$) under the control of the control circuit 10. The control circuit 10 is configured: to connect all of the receivers to the at least one detector through the receiver switch at a monitoring phase; and also to connect the receivers to the at least one detector one by one (sequentially) through the receiver switch at a check phase.

Claims

1. A moving object detection system, comprising:

an oscillation means (11 and 12) configured to generate a first oscillation signal ($S_1$) having a first frequency ($f_1$);

a transmitter (15) configured to transmit energy waves to a monitoring space, said energy waves having the same frequency as that of the first oscillation signal ($S_1$);

a receiver (16) configured to receive incoming energy waves from the monitoring space to generate an input signal ($S_{in}$);

a detector (17) configured to obtain a detection signal from the first oscillation signal ($S_1$) and the input signal ($S_{in}$), the detection signal being a Doppler shift signal when the input signal ($S_{in}$) includes a second frequency ($S_2$) that is different from the first frequency ($S_1$); and

a judgment device (18) configured: to judge whether or not a moving object (MO) approaching or leaving the receiver (16) exists in the monitoring space based on the detection signal; and to output a moving object detection signal if the moving object (MO) exists in the monitoring space;

**characterized in that**

the oscillation means (11 and 12) comprises: a first oscillator (11) configured to generate the first oscillation signal ($S_1$) to supply the first oscillation signal ($S_1$) to the transmitter (15) and the switch (13); and a second oscillator (12) configured to generate a check signal ($S_c$) to supply the check signal (Sc) to the switch (13), said check signal ($S_c$) having a check frequency ($f_c$) that is different from the first frequency ($f_1$), wherein:

(I) the moving object detection system is installed so as to monitor a monitoring space comprising an object which remains stationary with respect to the transmitter (15) and the receiver (16); or
(II) the transmitter (15) has the directivity by which the receiver (16) can directly receive one of the ultrasonic waves from the transmitter (15);or
(III) the moving object detection system further includes a movable mechanism for changing the orientation of the transmitter (15) so that the receiver (16) can receive the ultrasonic waves from the transmitter (15),

wherein the moving object detection system further comprises:

a switch (13) configured to supply the first oscillation signal ($S_1$) or the check signal ($S_c$) to the detector (17); and
a controller (10) that has a monitoring phase and a check phase and is configured: to supply the first oscillation signal ($f_1$) to the detector (17) through the switch (13) at the monitoring phase; and also to supply the check signal ($S_c$) to the detector (17) through the switch (13) at the check phase.

2. The moving object detection system of claim 1, wherein the check frequency (fc) is set within a variation range of the second frequency (f2) corresponding to a speed range of the moving object (MO) to be monitored.

3. The moving object detection system of claim 1, wherein the controller (10) comprises a microcomputer comprising a timer function, wherein the oscillation means (11 and 12) is formed with the timer function.

4. The moving object detection system of claim 1, wherein the controller (10) is configured: to supply the check signal ($S_c$) to the detector (17) through the switch (13) at the check phase; and subsequently to supply the first oscillation signal ($S_1$) to the detector (17) through the switch (13) at the monitoring phase.

5. The moving object detection system of claim 1, further comprising a transmitter switch (14), wherein the transmitter (15) comprises a plurality of transmitters (151-153) connected to the first oscillator (11) through the transmitter switch (14), wherein the controller (10) is configured to connect the transmitters (151-153) to the first oscillator (11) one by one through the transmitter switch (14) at the check phase.

6. A vehicle comprising the moving object detection system of any one of claims 1-5, said moving object detection system being installed so as to monitor said monitoring space, wherein the transmitter (15) and the receiver (16) of the system are located inside the vehicle as said monitoring space.

**Patentansprüche**

1. Erkennungssystem für ein sich bewegendes Objekt, umfassend:

ein Oszillationsmittel (11 und 12), das so konfiguriert ist, dass es ein erstes Oszillationssignal ($S_1$) mit einer ersten Frequenz ($f_1$) erzeugt;
einen Sender (15), der so konfiguriert ist, dass er Energiewellen zu einem Überwachungsraum sendet, wobei die Energiewellen die gleiche Frequenz wie die des ersten Oszillationssignals ($S_1$) aufweisen;
einen Empfänger (16), der so konfiguriert ist, dass er eingehende Energiewellen aus dem Überwachungsraum empfängt, um ein Ein-

gangssignal ($S_{in}$) zu erzeugen;

einen Detektor (17), der so konfiguriert ist, dass er ein Erkennungssignal aus dem ersten Oszillationssignal ($S_1$) und dem Eingangssignal ($S_{in}$) erhält, wobei das Erkennungssignal ein Doppler-Verschiebungssignal ist, wenn das Eingangssignal ($S_{in}$) eine zweite Frequenz ($S_2$) umfasst, die von der ersten Frequenz ($S_1$) verschieden ist; und

eine Beurteilungseinrichtung (18), die konfiguriert ist zum: Beurteilen basierend auf dem Erkennungssignal, ob ein sich bewegendes Objekt (MO), das sich dem Empfänger (16) nähert oder sich von diesem entfernt, im Überwachungsraum vorhanden ist oder nicht; und Ausgeben eines Bewegtobjekt-Erkennungssignals, wenn das sich bewegende Objekt (MO) im Überwachungsraum vorhanden ist;

**dadurch gekennzeichnet, dass**

das Oszillationsmittel (11 und 12) umfasst: einen ersten Oszillator (11), der so konfiguriert ist, dass er das erste Oszillationssignal ($S_1$) erzeugt, um das erste Oszillationssignal ($S_1$) an den Sender (15) und den Schalter (13) zu liefern; und einen zweiten Oszillator (12), der so konfiguriert ist, dass er ein Prüfsignal ($S_c$) erzeugt, um das Prüfsignal ($S_c$) an den Schalter (13) zu liefern, wobei das Prüfsignal ($S_c$) eine Prüffrequenz ($f_c$) aufweist, die von der ersten Frequenz ($f_1$) verschieden ist,

wobei:

> (I) das Erkennungssystem für ein sich bewegendes Objekt installiert ist, um einen Überwachungsraum zu überwachen, der ein Objekt umfasst, das in Bezug auf den Sender (15) und den Empfänger (16) stationär bleibt; oder
> (II) der Sender (15) die Richtcharakteristik aufweist, durch welche der Empfänger (16) eine der Ultraschallwellen direkt vom Sender (15) empfangen kann; oder
> (III) das Erkennungssystem für ein sich bewegendes Objekt ferner einen beweglichen Mechanismus zum derartigen Ändern der Orientierung des Senders (15) umfasst, dass der Empfänger (16) die Ultraschallwellen vom Sender (15) empfangen kann,

wobei das Erkennungssystem für ein sich bewegendes Objekt ferner umfasst:

> einen Schalter (13), der so konfiguriert ist, dass er das erste Oszillationssignal ($S_1$) oder das Prüfsignals ($S_c$) an den Detektor (17) liefert; und
> eine Steuerung (10), die eine Überwachungsphase und eine Prüfphase aufweist und konfiguriert ist zum: Liefern des ersten Oszillationssignals ($f_1$) in der Überwachungsphase durch den Schalter (13) an den Detektor (17); und außerdem Liefern des Prüfsignals ($S_c$) in der Prüfphase durch den Schalter (13) an den Detektor (17).

2. Erkennungssystem für ein sich bewegendes Objekt nach Anspruch 1, wobei die Prüffrequenz ($f_c$) innerhalb eines Änderungsbereichs der zweiten Frequenz ($f_2$) festgelegt ist, der einem Geschwindigkeitsbereich des sich bewegenden Objekts (MO) entspricht, das überwacht werden soll.

3. Erkennungssystem für ein sich bewegendes Objekt nach Anspruch 1,
wobei die Steuerung (10) einen Mikrocomputer umfasst, der eine Zeitgeberfunktion umfasst,
wobei das Oszillationsmittel (11 und 12) mit der Zeitgeberfunktion ausgebildet ist.

4. Erkennungssystem für ein sich bewegendes Objekt nach Anspruch 1, wobei die Steuerung (10) konfiguriert ist zum: Liefern des Prüfsignals ($S_c$) in der Prüfphase durch den Schalter (13) an den Detektor (17); und anschließendes Liefern des ersten Oszillationssignal ($S_1$) in der Überwachungsphase durch den Schalter (13) an den Detektor (17).

5. Erkennungssystem für ein sich bewegendes Objekt nach Anspruch 1, ferner umfassend einen Senderschalter (14), wobei der Sender (15) eine Mehrzahl von Sendern (151 - 153) umfasst, die mit dem ersten Oszillator (11) durch den Senderschalter (14) verbunden sind,
wobei die Steuerung (10) so konfiguriert ist, dass sie in der Prüfphase einen Sender nach dem anderen (151 - 153) durch den Senderschalter (14) mit dem ersten Oszillator (11) verbindet.

6. Fahrzeug, umfassend das Erkennungssystem für ein sich bewegendes Objekt nach einem der Ansprüche 1 - 5, wobei das Erkennungssystem für ein sich bewegendes Objekt zum Überwachen des Überwachungsraums installiert ist,
wobei der Sender (15) und der Empfänger (16) des Systems sich wie der Überwachungsraum innerhalb des Fahrzeugs befinden.

**Revendications**

1. Système de détection d'objets en mouvement, comprenant :

> un moyen d'oscillation (11 et 12) configuré de manière à générer un premier signal d'oscillation ($S_1$) présentant une première fréquence

(f$_1$) ;
un émetteur (15) configuré de manière à transmettre des ondes d'énergie à un espace de surveillance, lesdites ondes d'énergie présentant la même fréquence que celle du premier signal d'oscillation (S$_1$) ;
un récepteur (16) configuré de manière à recevoir des ondes d'énergie entrantes en provenance de l'espace de surveillance en vue de générer un signal d'entrée (S$_{in}$) ;
un détecteur (17) configuré de manière à obtenir un signal de détection à partir du premier signal d'oscillation (S$_1$) et du signal d'entrée (S$_{in}$), le signal de détection étant un signal de décalage Doppler lorsque le signal d'entrée (S$_{in}$) inclut une seconde fréquence (S$_2$) qui est différente de la première fréquence (S$_1$) ; et
un dispositif de détermination (18) configuré de manière à : déterminer si un objet en mouvement (MO) s'approchant ou quittant le récepteur (16) existe ou non dans l'espace de surveillance, sur la base du signal de détection ; et délivrer en sortie un signal de détection d'objet en mouvement si l'objet en mouvement (MO) existe dans l'espace de surveillance ;
**caractérisé en ce que** :

le moyen d'oscillation (11 et 12) comprend : un premier oscillateur (11) configuré de manière à générer le premier signal d'oscillation (S$_1$) en vue de fournir le premier signal d'oscillation (Si) à l'émetteur (15) et au commutateur (13) ; et un second oscillateur (12) configuré de manière à générer un signal de contrôle (S$_c$) en vue de fournir le signal de contrôle (S$_c$) au commutateur (13), ledit signal de contrôle (S$_c$) présentant une fréquence de contrôle (f$_c$) qui est différente de la première fréquence (f$_1$) ;
dans lequel :

(I) le système de détection d'objets en mouvement est installé de façon à surveiller un espace de surveillance comprenant un objet qui reste stationnaire par rapport à l'émetteur (15) et au récepteur (16) ; ou
(II) l'émetteur (15) possède la directivité par laquelle le récepteur (16) peut recevoir directement l'une des ondes ultrasonores en provenance de l'émetteur (15) ; ou
(III) le système de détection d'objets en mouvement inclut en outre un mécanisme mobile pour modifier l'orientation de l'émetteur (15) afin que le récepteur (16) puisse recevoir les ondes ultrasonores en provenance de l'émetteur (15) ;

dans lequel le système de détection d'objets en mouvement comprend en outre :

un commutateur (13) configuré de manière à fournir le premier signal d'oscillation (S$_1$) ou le signal de contrôle (S$_c$) au détecteur (17) ; et
un contrôleur (10) qui présente une phase de surveillance et une phase de contrôle, et qui est configuré de manière à : fournir le premier signal d'oscillation (f$_1$) au détecteur (17), par le biais du commutateur (13), à la phase de surveillance ; et en outre fournir le signal de contrôle (S$_c$) au détecteur (17), par le biais du commutateur (13) à la phase de contrôle.

2. Système de détection d'objets en mouvement selon la revendication 1, dans lequel la fréquence de contrôle (f$_c$) est définie dans une plage de variation de la seconde fréquence (f$_2$) correspondant à une plage de vitesse de l'objet en mouvement (MO) à surveiller.

3. Système de détection d'objets en mouvement selon la revendication 1, dans lequel
le contrôleur (10) comprend un micro-ordinateur comprenant une fonction de temporisation ;
le moyen d'oscillation (11 et 12) est formé avec la fonction de temporisateur.

4. Système de détection d'objets en mouvement selon la revendication 1, dans lequel le contrôleur (10) est configuré de manière à : fournir le signal de contrôle (S$_c$) au détecteur (17), par le biais du commutateur (13), à la phase de contrôle ; et subséquemment, fournir le premier signal d'oscillation (S$_1$) au détecteur (17), par le biais du commutateur (13), à la phase de surveillance.

5. Système de détection d'objets en mouvement selon la revendication 1, comprenant en outre un commutateur d'émetteur (14),
dans lequel l'émetteur (15) comprend une pluralité d'émetteurs (151-153) connectés au premier oscillateur (11) par le biais du commutateur d'émetteur (14) ;
dans lequel le contrôleur (10) est configuré de manière à connecter les émetteurs (151-153) au premier oscillateur (11), un par un, par le biais du commutateur d'émetteur (14), à la phase de contrôle.

6. Véhicule comportant le système de détection d'objets en mouvement selon l'une quelconque des revendications 1 à 5, ledit système de détection d'objets en mouvement étant installé de manière à surveiller ledit espace de surveillance ;
dans lequel l'émetteur (15) et le récepteur (16) du système sont situés à l'intérieur du véhicule comme ledit espace de surveillance.

FIG. 1

FIG. 2

FIG. 3

EP 2 124 070 B1

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP S55063774 B
- JP 2008008871 A
- JP H05232241 B
- WO 03052454 A1
- JP 61051583 A
- EP 08254455 A2
- US 6437730 B1

- EP 0557800 B1
- US 3883870 A
- US 5315304 A
- US 4980871 A
- EP 0684486 A2
- JP 2008145255 A